# EUROPEAN PATENT APPLICATION

(11) **EP 1 143 170 A2**
(43) Date of publication of application: **10.10.2001**
(21) Application number: 00830752.2
(22) Date of filing: 14.11.2000
(51) Int. Cl.: F16H 55/56

(54) **A pulley, for instance for continuously variable transmissions, and component therefor**

(30) Priority: 24.03.2000 IT TO000279
(71) Applicant: ADLER S.p.A., 38068 Rovereto (Trento) (IT)
(72) Inventor: Morone, Alfio, 20129 Milano (IT)
(74) Representative: Bosotti, Luciano

(57) **Abstract**

The pulley (1) comprises a half-pulley (3) which can perform a movement of axial sliding with respect to the axis of rotation (XM) of the pulley, and at least one centrifugal weight (7) which is able to co-operate with said mobile half-pulley (3) to bring about the aforesaid axial movement. A contrast element (8) for said at least one centrifugal weight (7) and the aforesaid mobile half-pulley have complementary guiding formations (10, 80) designed to guide the movement of relative axial sliding of the mobile half-pulley (3) and of the contrast element (8). The contrast element carries, associated to it, sliding blocks (11) bonded in the absence of play, for example, by means of co-moulding, gluing, ultrasonic or friction welding, rivets, or integral pins.

## Description

The present invention relates to a pulley according to the preamble of Claim 1.

Pulleys of this type are used, for example, in continuously variable transmissions (CVTs). Variable speed drives of this type are used, for example, in two-wheeled vehicles, such as scooters, or in four-wheeled vehicles, such as small four-wheeled vehicles, or else in vehicles for particular uses, such as golf carts, snowmobiles, etc.

The present invention deals with the problems that may typically be encountered in the use of a pulley of the type specified above, such as a drive pulley of a continuously variable transmission, moved, for example, by an internal-combustion engine or by an electric motor.

In the pulleys of the type specified above, the transmission of the torque between the mobile half-pulley and the hub of the fixed half-pulley is usually performed by means of three elements, namely:
- a plane thrust surface made in the mobile half-pulley;
- a contrast element, generally referred to as "roller-contrast plate", rigidly connected to the hub of the fixed half-pulley; and
- a set of sliding blocks, each block being housed in an appropriate seat made in the roller-contrast plate with the possibility of sliding axially on a corresponding ribbing which functions as a thrust surface made in the mobile half-pulley.

The sliding blocks in question, which are usually present in a number ranging between three and six, are made with materials characterized by low friction coefficients and good resistance to wear.

One of the problems that may be encountered in the use of the said pulleys is represented by the noise of the coupling between the aforesaid elements.

This noise may mainly be put down to the irregularity of the speed of rotation of the engine or motor, especially at low r.p.m., and to the simultaneous presence, between the components designed to ensure torque transmission, of different forms of coupling play necessary to enable assembly and ensure capability of movement of the mobile half-pulley with respect to the fixed half-pulley.

As a result of the gradual wear during use, the said forms of coupling play increase and, as a result, the noise linked to operation of the continuously variable transmission increases.

In the past, various solutions have already been proposed to combat this negative phenomenon.

For example, one solution has been to increase the extension of the resting surfaces of each sliding block on the plane surface made on the mobile half-pulley and on its housing in the roller-contrast plate. In certain particular applications, a metal supporting insert has also been introduced between the sliding block and its housing.

The purpose of the present invention is to provide a more satisfactory solution to the above-mentioned problems.

According to the present invention, the above purpose is achieved thanks to a pulley having the characteristics referred to specifically in the ensuing claims.

The invention also relates, independently, to the corresponding component.

Substantially, the solution according to the invention proposes the making of each sliding block as a component bonded, in the absence of any play (for example, by it being co-moulded, glued, fixed by means of rivets or pins, welded, etc.), to the guiding formation to which it is associated (in the example illustrated in what follows, to the roller-contrast plate) so as to form practically a single piece with the plate itself. In this way, the possibility of any wear occurring of the surface of the sliding block set in contact with the housing on the roller-contrast plate is eliminated.

The present invention will now be described, purely by way of non-limiting example, with reference to the attached drawings, in which:
- Figure **1** illustrates, in a diametral cross section, a pulley made according to the invention;
- Figure **2** essentially corresponds to a view of the pulley of Figure 1 according to the direction of the arrow II appearing in Figure 1;
- Figure **3** corresponds to a section according to the line III-III of Figure 2; and
- Figures **4** and **5** are two further views substantially corresponding to Figure 3 and aimed at illustrating two of the numerous possible variant embodiments of the invention.

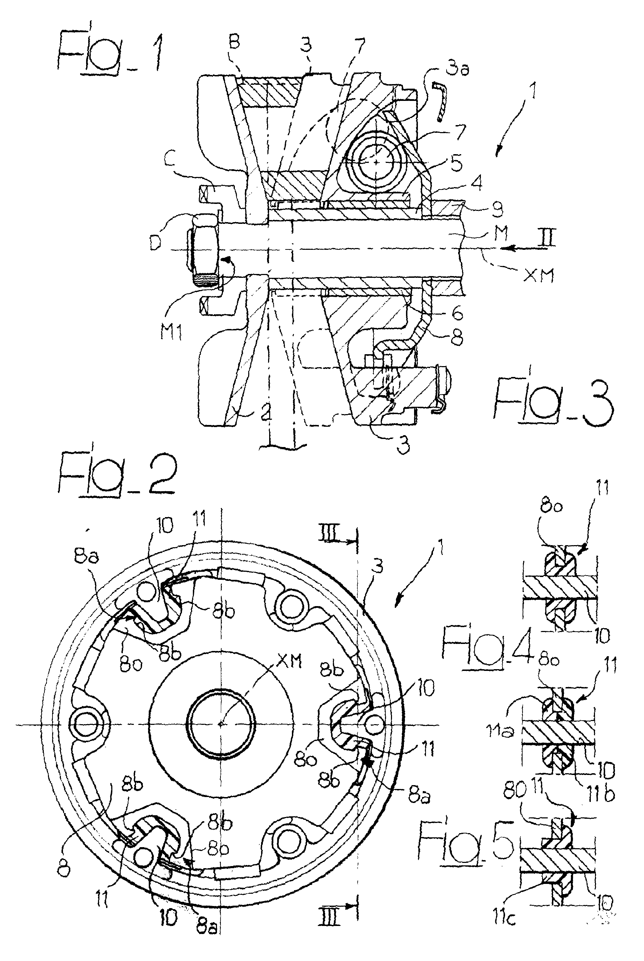

In Figures 1 and 2, the reference number 1 designates, as a whole, a pulley which can be used, for example, as a drive pulley in a continuously variable transmission (CVT).

The pulley, which is designed to be mounted on a driving shaft M, basically comprises two parts, or half-pulleys, which are currently referred to as fixed half-pulley 2 and mobile half-pulley 3.

The terms "fixed" and "mobile" refer to the movement of axial sliding with respect to the principal axis XM of the driving shaft M.

The fixed half-pulley 2 is in fact rigidly fixed to the shaft M in a position corresponding to a threaded end shank M1 by means of a clamping collar C and a nut D, in such a way that the half-pulley 2 is to all effects and purposes integral with the driving shaft M, it being, of course, able to rotate with the latter about the axis XM.

The fixed half-pulley 2 carries, associated to it (possibly formed of a single piece by means of a common process of pressure die-casting), a tubular sleeve 4 on which the hub 5 of the mobile half-pulley 3 is slidingly fitted, the said hub also being tubular.

As illustrated in the drawing, the hub 5 is usually made of one piece with the corresponding mobile half-pulley 3 by means of a common process of pressure die-casting.

Set between the sleeve 4 and the hub 5 is an element 6, this also being of a tubular shape (i.e., in practice a plain bearing or bushing), which is able to follow the hub 5 of the half-pulley 3 in its axial sliding movement with respect to the sleeve 4 (and hence with respect to the driving shaft M and to the fixed half-pulley 2), as schematically illustrated by the dashed line in Figure 1.

The arrangement described above thus enables the mobile half-pulley 3 to move with respect to the fixed half-pulley 2 in the direction of the axis XM of the shaft M between the following two positions:
- a position in which the mobile half-pulley 3 is at a maximum distance away, as represented in Figure 1 by the solid line; and
- a position of maximum approach, represented schematically, again in Figure 1, by a dashed line.

The above-mentioned two positions correspond to respective extreme positions of winding of a belt B on the pulley 1, the said belt B being designed to perform transmission of the movement of rotation between the pulley 1, functioning as a drive pulley, and another pulley (not illustrated) designed to function as a driven pulley of a continuously variable transmission.

The above corresponds to criteria that are altogether known to the prior art, and that therefore do not require any detailed illustration herein, also in so far as they are not important for the purpose of understanding the present invention.

Likewise known is the fact that the movement of approach of the mobile half-pulley 3 with respect to the fixed half-pulley 2 is obtained, through all the intermediate positions comprised between the aforesaid extreme positions described previously, under the action of centrifugal weights 7, which usually consist of rollers (for example, arranged in three pairs of rollers set 120° apart along the peripheral development of the pulley 1). The weights 7 are designed to act between a surface of thrust 3a, made on the side of the mobile half-pulley 3 opposite to the fixed half-pulley 2, and a contrast element 8, which is rigidly connected to the hub 5 of the fixed half-pulley 2 possibly owing to the presence of a fixing element 9.

Since the contrast element 8 is axially integral with the fixed half-pulley 2, it causes the centrifugal force to which the weights 7 are subjected with an intensity that increases with the increase in speed of rotation of the pulley 1 to result in a stress applied on the thrust surface 3a in such a way as to promote advance of the mobile half-pulley 3 towards the fixed half-pulley 2.

The contrast element 8 (which, because of its function, is referred to as a "roller-contrast plate") usually consists of a piece of sheet metal pressed and blanked so as bestow on it a general plate-like or cup-like conformation with a star-shaped or spoked structure which can be appreciated better by reference to Figure 2.

In order to enable axial movement of the mobile half-pulley 3 with respect to the contrast element 8 (which, it should be remembered, is axially integral with respect to the shaft M and to the fixed half-pulley 2), the mobile half-pulley 3 is provided, along the profile of the thrust surface 3a, with a plurality of axial ribbings 10 which project radially towards the inside of the half-pulley 3.

In the exemplary embodiment illustrated - which is purely a non-limiting example - the presence of three ribbings 10 is envisaged, arranged in angular positions 120° apart along the circumferential development of the mobile half-pulley 3, and hence of the element 8.

In positions corresponding to the three ribbings 10, the element 8 has three plane portions 80, each having a notch 8a which defines a corresponding sliding seat for one of the ribbings 10.

Each of the ribbings 10 and the corresponding plane portion 80 of the element 8 bearing the respective notch 8a consequently make up complementary guiding formations.

Inserted in each of the notches 8a is a sliding block 11 made of a material characterized by a low coefficient of friction and a good wear resistance, as well as good resistance to high temperatures (100-120°C).

The said material may, for example, be a plastic material, such as polyamide containing anti-wear and anti-friction fillers.

According to the present invention, each sliding block 11 is made with and/or coupled to the body of the contrast element 8 in such a way as to be bonded in the absence of play to the element 8 itself, so as to form practically a single piece with the element 8. As a result, any coupling play is eliminated, so preventing the onset of phenomena of wear of the surface of the sliding block 11 in contact the notch 8a provided on the element 8 and serving as a housing for receiving the sliding block 11 itself.

In order to ensure that the sliding block is bonded, in the absence of any play, to the element 8, it is possible to resort to different solutions.

This result may be obtained, for example, by co-moulding (over-moulding), gluing, and/or welding the sliding block 11 on the element 8, or else by making a fixed connection of the block 11 to the element 8 by means of fixing elements (rivets, pins, etc.).

In the case of over-moulding, the shape of the element 8 described previously, and in particular the presence of the plane portions 80, enables moulding, using a special, injection mould, of the material of the sliding block 11 on the element 8. The housing of the sliding block 11 (i.e., the notch 8a, in the example illustrated) is then provided with one or more areas for withstanding the centrifugal force which may develop with the rotation of the pulley and which is such as to tend to detach the sliding block 11 from the element 8.

In the exemplary embodiment illustrated (see in particular Figure 2), the aforesaid areas for withstanding the centrifugal force are made in such a way that the notch 8a functioning as a housing for receiving the sliding block 11 has a restricted mouth part such as to define one or preferably two shoulders 8b which function in practice as teeth that prevent the corresponding insert 11 from coming out of the notch 8a.

The corresponding bonded connection is achieved as a result of the penetration of the material making up the insert 11 inside the respective housing when the co-moulding operation is performed.

The end result that may be achieved is illustrated, for example, in the sectional view of Figure 3.

The fact of making the bonded connection by means of gluing may present the advantage afforded by the possibility of using a sliding block 11 that is previously pre-formed.

In this case, it is preferable to adopt, for the sliding block, a form which enables its mounting in the corresponding housing provided on the element 8, at the same time providing surfaces for withstanding the centrifugal force that acts on the sliding block 11.

For example, as illustrated in Figure 4, it is possible to use a sliding block 11 made up of two complementary elements 11a, 11b designed to be applied in the corresponding housings starting from opposite faces of the element 8 (represented, in Figures 3-5, by the plane part 80).

Alternatively, the sliding block 11 may be made with a general mushroom-shaped or T-shaped profile (see, in particular, Figure 5) which enables insertion thereof inside the corresponding housing starting from one of the faces of the element 8, for example by slotting it into place.

Both the solutions represented in Figures 4 and 5 afford the advantage that, for the purpose of achieving the action of retention against the centrifugal force, the possibility is maintained of providing the shoulders 8b referred to previously.

In order to perform gluing of the sliding block 11 on the element 8, it is possible to use currently manufactured adhesives, provided that they are compatible with the materials of which the element 8 and the sliding block 11 are made, the element 8 normally being made of a metal material, and the sliding block 11 typically being made of a plastic material, such as polyamide. Glues of such a type are, for example, phenolic resin-based glues and vinylic resin-based glues.

The solutions represented in Figures 4 and 5 can be adopted also in the case where the bonding of the sliding block 11 to the element 8 is obtained, for example, by means of metal rivets or by means of integral pins made in a part of the sliding block 11 (for example, the part lla) and designed to be inserted into holes made on a complementary part (such as the part 80).

Particularly advantageous appears the possibility of obtaining the aforesaid bonded connection by welding the inserts 11 onto the element 8 preferably by means of ultrasonic welding or friction welding.

The solution described further presents the advantage of enabling a reduction in the number of components required for making the pulley 1, likewise simplifying the assembly process, as well as rendering it more efficient.

The assembly of pulleys of the type represented in Figure 1 is currently performed by hand. The assembly of the sliding blocks 11 (and of possible inserts, for instance made of metal material, set between the sliding blocks and their housings) on the element 8 and the subsequent insertion in the mobile half-pulley 3 cannot be performed automatically on account of the difficulty of handling the parts, on account of the complicated shape of the sliding blocks 11, on account of the need to maintain particular orientations between the various elements involved, and on account of the lack of stability of fixing of the sliding blocks 11 in the corresponding housings on the element 8. The solution according to the invention enables, instead, automation of the assembly operation, at least as regards insertion of the element 8 in the half-pulley assembly made up of the half-pulleys 2 and 3. All this is obtained without requiring particularly accurate manipulations or very costly plants.

Of course, without prejudice to the principle of the invention, the details of construction and the embodiments may be varied widely with respect to what is described and illustrated herein, without thereby departing from the scope of the present invention. This applies in particular as regards the possibility of reversing the roles played by the ribbings 10 and the housings of the element 8 by arranging the sliding blocks 11 on the pulley 3.

## Claims

1. A pulley (1) comprising a half-pulley (3) adapted to perform a movement of axial sliding with respect to the axis of rotation (XM) of the pulley, at least one centrifugal weight (7) which is adapted to co-operate with said mobile half-pulley (3) and an element (8) functioning as a contrast element for said at least one centrifugal weight (7) to produce the aforesaid axial movement of the mobile half-pulley (3) as a result of a movement of said at least one centrifugal weight (7) induced by the rotation of the pulley (1); said half-pulley (3) and said contrast element (8) being provided with complementary guiding formations (10, 80) designed to guide the movement of relative axial sliding of said half-pulley (3) and of said contrast element (8), and in which at least one (80) of said guiding formations carries, associated to it, a sliding block (11),
**characterized in that** said sliding block (11) is bonded in the absence of play to the guiding formation (80) that carries it.

2. A pulley according to Claim 1, **characterized in that** said sliding block (11) is co-moulded or over-moulded to the guiding formation (80) that carries it.

3. A pulley according to Claim 1, **characterized in that** said sliding block (11) is glued to the guiding formation (80) that carries it.

4. A pulley according to Claim 1, **characterized in that** said sliding block (11) is fixed, by riveting, to the guiding formation (80) that carries it.

5. A pulley according to Claim 1, **characterized in that** said sliding block (11) is applied to the guiding formation (80) that carries it by means of integral pins.

6. A pulley according to Claim 1, **characterized in that** said sliding block (11) is mounted, by welding, on the guiding formation (80) that carries it.

7. A pulley according to Claim 6, **characterized in that** said sliding block (11) is mounted, by ultrasonic welding or friction welding, on the guiding formation (80) that carries it.

8. A pulley according to any of Claims 1-7, **characterized in that** said guiding formation (80) that carries the sliding block (11) has a corresponding housing (8a) for receiving said sliding block (11), said housing (8a) having formations (8b) capable of countering the centrifugal stresses acting on the sliding block (11) as a result of the rotation of the pulley (1).

9. A pulley according to Claim 8, **characterized in that** said housing is made in the form of a notch (8a) provided with a restricted mouth part defining at least one shoulder (8b) which functions as a retention tooth for said sliding block (11).

10. A pulley according to any of the foregoing claims, **characterized in that** said sliding block (11) is made up of two parts (11a, 11b) connected to said guiding formation (80) that carries the sliding block (11) .

11. A pulley according to any of the foregoing claims, **characterized in that** said sliding block (11) has at least one part (11c) that can be slotted into a corresponding housing (8a) provided in the guiding formation that carries the sliding block (11).

12. A component of the pulley according to any of Claims 1 to 11, said component comprising said guiding formation (80), and said sliding block (11) bonded to said formation.

13. A component according to Claim 12, **characterized in that** said component consists of said contrast element (8).
